# EUROPÄISCHE PATENTSCHRIFT

(11) **EP 0 131 543 B1**
(45) Veröffentlichungstag und Bekanntmachung des Hinweises auf die Patenterteilung: **13.07.1988**
(21) Anmeldenummer: 84810282.8
(22) Anmeldetag: 08.06.1984
(51) Int. Cl.: C09B 62/25, D06P 3/66

(54) **Reaktivfarbstoffe, deren Herstellung und Verwendung**
Reactive dyes, their preparation and their use
Colorants réactifs, leur préparation et leur utilisation

(30) Priorität: 14.06.1983 CH 3251/83
(43) Veröffentlichungstag der Anmeldung: 16.01.1985
(73) Patentinhaber: CIBA-GEIGY AG, 4002 Basel (CH)
(72) Erfinder: Seitz, Karl, Dr., CH-4104 Oberwil (CH)

(56) Entgegenhaltungen:
- EP-A- 0 019 785
- EP-A- 0 065 479
- BE-A- 703 598
- FR-E- 75 771

## Beschreibung

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollen ferner eine hohe Reaktivität besitzen, so dass nur kurze Verweilzeiten erforderlich sind, und sie sollen insbesondere Färbungen mit hohen Fixiergraden liefern. Von bekannten Farbstoffen werden diese Anforderungen nur in ungenügendem Masse erfüllt.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen bireaktiven Farbstoffen die gestellte Aufgabe gelöst wird.

Gegenstand der Erfindung sind Reaktivfarbstoffe der Formel

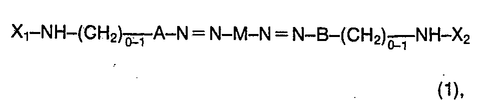

worin M zweifach gekuppelte 1-Amino-8-hydroxynaphthalin-3,6-disulfonsäure, 1-Amino-8-hydroxynaphthalin-4,6-disulfonsäure, 1-Amino-8-hydroxynaphthalin-4-sulfonsäure oder 2-Amino-5-hydroxynaphthalin-7-sulfonsäure, A und B unabhängig voneinander Sulfophenylen oder Sulfonaphthylen, das weitersubstituiert sein kann, und X₁ und X₂ je ein 2,4-Difluor-5-chlorpyri- midyl-(6)-Rest ist, mit der Bedingung, dass A und B zusammen mindestens 3 Sulfogruppen enthalten.

Die Reste A und B in Formel (1) können weitersubstituiert sein, beispielsweise durch Alkylgruppen mit 1 bis 4 Kohlenstoffatomen, wie Methyl, Äthyl, Propyl, Isopropyl oder Butyl, Alkoxygruppen mit 1 bis 4 Kohlenstoffatomen, wie Methoxy, Äthoxy, Propoxy, Isopropoxy oder Butoxy, Alkanoylaminogruppen mit 1 bis 4 Kohlenstoffatomen, wie Acetylamino oder Propionylamino, Alkoxycarbonyl mit 1 bis 4 Kohlenstoffatomen im Alkoxyrest, wie Methoxycarbonyl oder Äthoxycarbonyl, Alkylsulfonyl mit 1 bis 4 Kohlenstoffatomen, wie Methylsulfonyl oder Äthylsulfonyl. Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Äthylcarbamoyl, Sulfamoyl, N-Alkylsulfamoyl mit 1 bis 4 Kohlenstoffatomen, wie N-Methylsulfamoyl, N-Äthylsulfamoyl, N-Propylsulfamoyl, N-Isopropylsulfamoyl oder N-Butylsulfamoyl, Ureido, Hydroxy, Carboxy, Sulfomethyl oder Sulfo. Bevorzugt sind die Substituenten Methyl, Äthyl, Methoxy, Äthoxy, Acetylamino, Chlor, Brom, Ureido, Hydroxy, Carboxy, Sulfomethyl und insbesondere Sulfo.

Bevorzugt sind:

Reaktivfarbstoffe der Formel 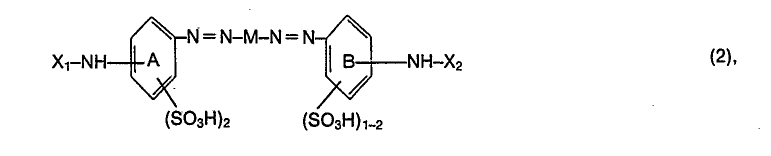 worin M, X₁ und X₂ die unter Formel (1) angegebenen Bedeutungen haben, und die Benzolringe A und B unabhängig voneinander gegebenenfalls weitersubstituiert sind;

Reaktivfarbstoffe der Formel (2), worin die Benzolringe A und B nicht weitersubstituiert sind;

Reaktivfarbstoffe der Formel 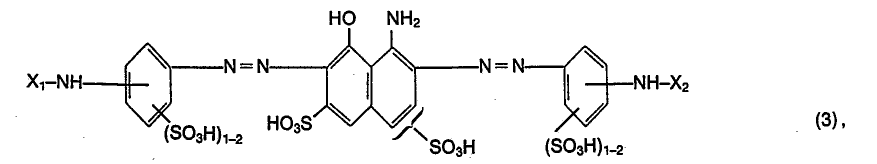 worin X₁ und X₂ die für Formel (1) geltenden Bedeutungen haben, und die Gesamtzahl an Sulfogruppen 5 bis 6 beträgt; ₆₅

Reaktivfarbstoffe der Formel 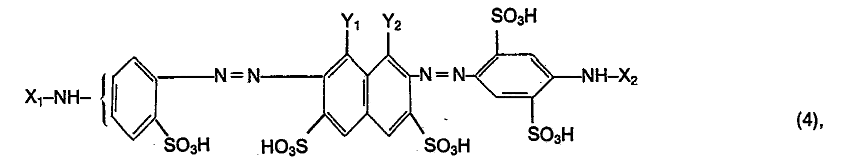 worin ein Y OH, und das andere Y NH₂ ist, und Xᵢ und X₂ die für Formel (1) geltenden Bedeutungen haben;

Reaktivfarbstoffe der Formel 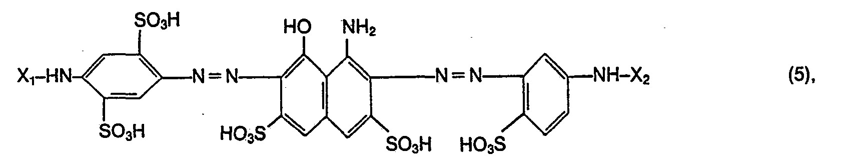 worin X₁ und X₂ die für Formel (1) geltenden Bedeutungen haben.

Das Verfahren zur Herstellung der Reaktivfarbstoffe der Formel (1) ist dadurch gekennzeichnet, dass man Diazokomponenten der Formeln 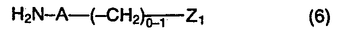 und 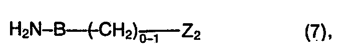 worin Z₁ und Z₂ unabhängig voneinander NH₂, Acetylamino oder Nitro ist, die Kupplungskomponente 1-Amino-8-hydroxynaphthalin-3,6-disulfonsäure, 1-Amino-8-hydroxynaphthalin-4,6-disulfonsäure, 1-Amino-8-hydroxynaphthalin-4-sulfonsäure oder 2-Amino-5-hydroxynaphthalin-7-sulfonsäure, und 2 Äquivalente 2,4,6-Trifluor-5-chlorpyrimidin durch Diazotierung, Kupplung und Kondensation in geeigneter Reihenfolge zu Reaktivfarbstoffen der Formel (1) umsetzt, wobei, falls Z₁ oder Z2 Acetylamino oder Nitro ist, dieses vor der Konden₋ sation mit dem Halogenpyrimidin durch Verseifen der Acetylaminogruppe bzw. Reduzieren der Nitrogruppe in die NH₂ Gruppe übergeführt wird.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Die für jede Teilreaktion zu verwendenden Ausgangsstoffe ergeben sich aus Formel (1). Im allgemeinen führt man die Umsetzung schrittweise nacheinander aus, wobei die Reihenfolge der einfachen Reaktionen zwischen den einzelnen Reaktionskomponenten gewissen Einschränkungen unterliegt. Einerseits muss die Kupplung auf die Mittelkomponente M in saurer Lösung, in ortho-Stellung zur NH₂ Gruppe, zuerst ausgeführt werden, da bei vorangehender Kupplung in neutraler oder alkalischer Lösung, in ortho-Stellung zur OH-Gruppe, eine nachfolgende Kupplung in ortho-Amino-Stellung nicht mehr möglich ist. Da ausserdem unter bestimmten Voraussetzungen Hydrolyse eines 2,4-Difluor-5-chlor- pyrimidinesters eintritt, muss ein Zwischenprodukt, welches Acetylaminogruppen (siehe weiter unten) enthält, zwecks Abspaltung der Acetylgruppen verseift werden, bevor mit einem 2,4,6-Trifluor-5-chlorpyrimidin kondensiert wird.

Wichtige Verfahrensvarianten sind dadurch gekennzeichnet,
1. dass man 2,4,6-Trifluor-5-chlorpyrimidin und eine Diaminobenzolsulfonsäure kondensiert, das erhaltene primäre Kondensationsprodukt diazotiert und sauer auf 1-Amino-8-hydroxynaphthalin-3,6-disulfonsäure kuppelt; dass man ein weiteres Äquivalent 2,4,6-Trifluor-5-chlorpyrimidin mit einer Diaminobenzolsulfonsäure kondensiert, das Kondensationsprodukt diazotiert und die so erhaltene zweite Diazoniumverbindung in neutraler bis alkalischer Lösung auf die anfangs hergestellte Monoazoverbindung kuppelt.
2. dass man 2 Mol einer Amino-acetylaminobenzolsulfonsäure oder zwei verschiedene Aminoacetylamino-benzolsulfonsäuren, sauer und alkalisch, auf 1-Amino-8-hydroxynaphthalin-3,6- disulfonsäure kuppelt, den erhaltenen Disazofarbstoff verseift und den entstandenen Diaminodisazofarbstoff mit 2 Äquivalenten 2,4,6-Trifluor-5- chlorpyrimidin kondensiert. Statt einer Aminoacetylamino-benzolsulfonsäure kann man auch eine Amino-nitro-benzolsulfonsäure bzw. zwei verschiedene Amino-nitro-benzolsulfonsäuren als Diazokomponenten verwenden, in dem erhaltenen Dinitrodisazofarbstoff die Nitrogruppen durch Reduktion, z. B. mit Natriumsulfid oder Natriumsulfhydrat, in Aminogruppen umwandeln, und den entstandenen Diaminodisazofarbstoff, wie oben beschrieben, weiterverarbeiten.
3. dass man eine Amino-acetylamino-benzolsulfonsäure diazotiert und sauer auf 1-Amino-8-hydroxynaphthalin-3,6-disulfonsäure kuppelt, und aus der erhaltenen o-Aminoazoverbindung die Acetylgruppe durch Verseifen abspaltet; dass man ferner 2,4,6-Trifluor-5-chlorpyrimidin und eine Diaminobenzolsulfonsäure miteinander kondensiert, das primäre Kondensationsprodukt diazotiert und auf die zu Anfang hergestellte Monoazoverbindung kuppelt, und dann die freie, acylierbare Aminogruppe im Rest der ersten Diazokomponente mit 2,4,6-Trifluor-5-chlorpyrimidin kondensiert. Auch bei dieser Verfahrensvariante kann man anstelle der Amino-acetylamino-benzolsulfonsäure eine Amino-nitro-benzolsulfonsäure als Diazokomponente verwenden, die Nitro-o-aminoazoverbindung reduzieren, und anschliessend wie oben weiterkuppeln.

In der oben angegebenen Erläuterung der wichtigsten Verfahrensvarianten wurde stets als zweifach kuppelbare Kupplungskomponente die 1-Amino-8-hydroxynaphthalin-3,6-disulfonsäure und als acylierbare Diazokomponente eine Diaminobenzolsulfonsäure bzw. Amino-acetylamino-benzolsulfonsäure genannt. Statt derer können selbstverständlich, entsprechend der Definition für die Reste M, A und B in Formel (1), andere Komponenten eingesetzt werden, z.B. als Kupplungskomponente die 1-Amino-8-hydroxynaphthalin-4,6-disulfonsäure, und als Diazokomponenten anders substituierte Diaminobenzole, wie 1,4-Diaminobenzol-2,5-disulfonsäure, oder Diaminonaphthaline, wie 2,6-Diaminonaphthalin-4,8-disulfonsäure.

Im folgenden sollen mögliche Ausgangsstoffe, die zur Herstellung der Reaktivfarbstoffe der Formel (1) verwendet werden können, einzeln genannt werden.

Diazokomponenten der Formeln (6) und (7) 2,6-Diaminonaphthatin-4,8-disuifonsäure,
1,4-Diaminobenzol-2-sulfonsäure,
1,4-Diaminobenzol-2,5-disulfonsäure,
1,4-Diaminobenzol-2,6-disulfonsäure,
1,3-Diaminobenzol-4-sulfonsäure,
1,3-Diaminobenzol-4,6-disulfonsäure,
1,4-Diamino-2-chlorbenzol-5-sulfonsäure,
1,4-Diamino-2-methylbenzol-5-sulfonsäure,
1,5-Diamino-6-methylbenzol-3-sulfonsäure,
1,3-Diamino-6-methylbenzol-4-sulfonsäure,
3-(3'- bzw. 4'-Aminobenzoylamino)-1-aminobenzol-6-sulfonsäure,
1-(4'-Aminobenzoylamino)-4-aminobenzol-2,5- disulfonsäure,
4,4'-Diaminodiphenylharnstoff-2,2'-disulfonsäure,
4,4'-Diaminodiphenyloxyäthan-2,2'-disulfonsäure,
4,4'-Diaminostilben-2,2'-disulfonsäure,
4,4'-Diaminodiphenyläthan-2,2'-disulfonsäure.

Falls als Diazokomponente statt eines Diamins eine Amino-acetylaminoverbindung eingesetzt werden soll, aus welcher nachträglich die Acetylgruppe durch Verseifen wieder abgespalten wird, wie dies oben in den Erläuterungen der Verfahrensvarianten beschrieben und in den Formeln (6) und (7) vorgesehen ist, kommen die Monoacetylverbindungen der oben genannten Diazokomponenten in Frage, z. B. 1-Acetylamino-3-aminobenzol-4-sulfonsäure oder 1-Acetylamino-4-aminobenzol-3-sulfonsäure.

Gemäss Formel (1) kann die Aminogruppe, welche den 2,4-Difluor-5-chlorpyrimidyl-(6)-Rest X₁ mit dem Rest A verbindet, direkt oder über eine -CH₂-Gruppe an A gebunden sein; gleiches gilt für X₂ und B. Im Falle einer Bindung über -CH₂- verwendet man als Diazokomponente eine Verbindung, die ausser der zu diazotierenden Aminogruppe eine acylierbare Aminomethylgruppe enthalten kann, z.B. 2-Amino-5-aminomethylnaph- thalin-1-sulfonsäure, 2-Amino-5-aminomethyl- naphthalin-1,7-disulfonsäure oder 1-Amino-4-methoxy-5-aminomethylbenzol-6-sulfonsäure.

Kupplungskomponenten
1-Amino-8-hydroxynaphthalin-3,6-disulfonsäure,
1-Amino-8-hydroxynaphthalin-4,6-disulfonsäure,
1-Amino-8-hydroxynaphthalin-4-sulfonsäure,
2-Amino-5-hydroxynaphthalin-7-sulfonsäure.

### Reaktivkomponente

### 2,4,6-Trifluor-5-chlorpyrimidin.

Die Diazotierung der Diazokomponenten der Formeln (6) und (7) bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die erste Kupplung auf die Kupplungskomponente M erfolgt bei sauren bis stark sauren pH-Werten, die zweite Kupplung bei schwach sauren, neutralen bis schwach alkalischen pH-Werten.

Die Kondensationen des 2,4,6-Trifluor-5-chlor- pyrimidins mit den Diazokomponenten der Formeln (6) und (7) bzw. mit acylierbaren Monoazo-oder Disazo-Zwischenprodukten erfolgen vorzugsweise in wässriger Lösung oder Suspension, bei niedriger Temperatur und bei schwach saurem, neutralem bis schwach alkalischem pH-Wert. Vorteilhaft wird der bei der Kondensation freiwerdende Fluorwasserstoff laufend durch Zugabe wässriger Alkalihydroxyde, -carbonate oder -bicarbonate neutralisiert.

Die Disazofarbstoffe der Formel (1) sind faser-(bi)reaktiv, da sie an jedem der beiden Pyrimidinringe ein abspaltbares Fluoratom gebunden enthalten.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern, z. B. von Wolle, Seide oder Wolle enthaltenden Mischgeweben. Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben. Die Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

### Beispiel 1

Zu einer neutralen Lösung von 75,2 Teilen m-Phenylendiaminsulfonsäure in 1500 Teilen Wasser werden bei 10°Cim Laufe von 2 Stunden 104,4 Teile 2,4,6-Trifluor-5-chlorpyrimidin zugetropft. Nach beendeter Zugabe des Acylierungsmittels rührt man noch weitere 3 Stunden. Hierauf stellt man das Reaktionsgemisch mit 2-n Natriumhydroxydlösung auf pH 7 und isoliert das Kondensationsprodukt der Formel

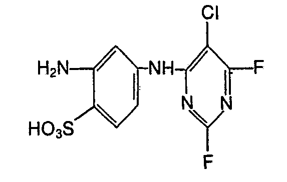

### durch Einstreuen von 10 Vol.% Kochsalz.

Zu einer neutralen Lösung von 107,2 Teilen 1,4-Phenylendiamin-2,5-disulfonsäure in 2000 Teilen Wasser werden bei Zimmertemperatur im Laufe von 3 Stunden 104 g 2,4,6-Trifluor-5-chlorpyrimi- din zugetropft und durch gleichzeitige Zugabe von 2-n Natriumhydroxydlösung wird das pH des Reaktionsgemisches bei 7 gehalten. Nach Klärfiltration wird das Kondensationsprodukt der Formel 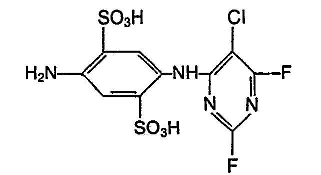 durch Zugabe von 25 Vol.% Kochsalz isoliert.

13,46 Teile des oben beschriebenen Kondensationsproduktes aus m-Phenylendiaminsulfonsäure und 2,4,6-Trifluor-5-chlorpyrimidin werden in üblicher Weise diazotiert. Zur erhaltenen Aufschlämmung der gelben Diazoverbindung gibt man hierauf eine feine Aufschlämmung von 12,76 Teilen 1-Amino-8-hydroxynaphthalin-3,6-disulfonsäure und hält das pH des Kupplungsgemisches durch Zutropfen von 1-n Natriumhydroxydlösung zwischen 2 und 3.

Anderntags stellt man die erhaltene Lösung des Monoazofarbstoffes auf pH 7, gibt 12 Teile Natriumbicarbonat hinzu, sowie das in üblicher Weise hergestellte Diazoniumsalz aus 16,66 Teilen des Kondensationsproduktes aus 1,4-Phenylendiamin-2,5-disulfonsäure und 2,4,6-Trifluor-5-chlor- pyrimidin.

Nach beendeter Kupplung wird der Farbstoff mit Natriumchlorid ausgesalzen, abfiltriert und im Vakuum getrocknet. Der so erhaltene Farbstoff besitzt die folgende Formel 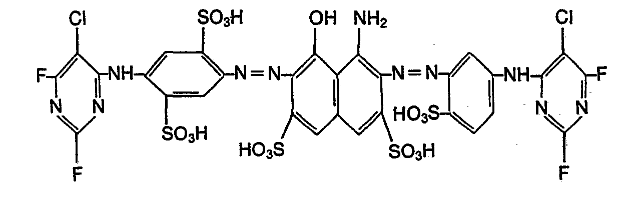 und färbt Baumwolle in marineblauen Tönen.

### Beispiel 2

Zu einer neutralen Lösung von 75,2 Teilen p-Phenylendiaminsulfonsäure in 800 Teilen Wasser werden bei 10°C im Laufe von 1 bis 2 Stunden 105 Teile 2,4,6-Trifluor-5-chforpyrimidin zugetropft. Anschliessend rührt man noch während ca. 3 Stunden und filtriert hierauf das ausgefallene Kondensationsprodukt.

Zur Reinigung wird der Rückstand neutral gelöst, mit Aktivkohle entfärbt und das Kondensationsprodukt der Formel 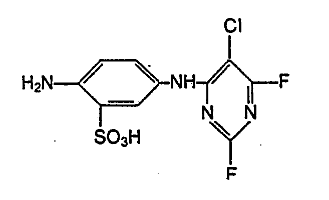 mit Natriumchlorid ausgesalzen.

107,2 Teile 1,3-Phenylendiamin-4,6-disulfonsäure werden in 400 Teilen Wasser aufgeschlämmt und durch Zugabe von Natriumhydroxydlösung auf pH 5,5 gestellt. Man erwärmt die erhaltene Lösung auf 35 bis 40°C und lässt im Laufe einer Stunde 105 Teile 2,4,6-Trifluor-5-chlorpyrimidin zutropfen, wobei durch gleichzeitige Zugabe von 2-n Natriumhydroxydlösung das pH bei 5,5 gehalten wird. Wenn keine Lauge mehr verbraucht wird, wird das gebildete Kondensationsprodukt der Formel 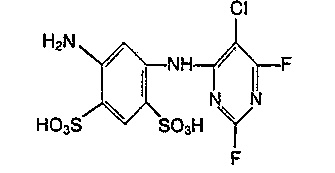 mit Kaliumchlorid ausgesalzen und abfiltriert.

13,46 Teile des oben beschriebenen Kondensationsproduktes aus p-Phenylendiaminsulfonsäure und 2,4,6-Trifluor-5-chlorpyrimidin werden in üblicher Weise diazotiert. Zur erhaltenen Aufschlämmung der gelben Diazoverbindung gibt man hierauf eine feine Aufschlämmung von 12,76 Teilen 1-Amino-8-hydroxynaphthalin-3,6-disulfonsäure und hält das pH des Kupplungsgemisches durch Zutropfen von 1-n Natriumhydroxydlösung zwischen 2 und 3.

Anderntags stellt man die erhaltene Lösung des Monoazofarbstoffes auf pH 7, gibt 12 Teile Natriumbicarbonat hinzu sowie das in üblicher Weise hergestellte Diazoniumsalz aus 16,66 Teilen des Kondensationsproduktes aus 1,3-Phenylendiamin-4,6-disulfonsäure und 2,4,6-Trifluor-5-chlor- pyrimidin.

Der so erhaltene Farbstoff besitzt die folgende Formel 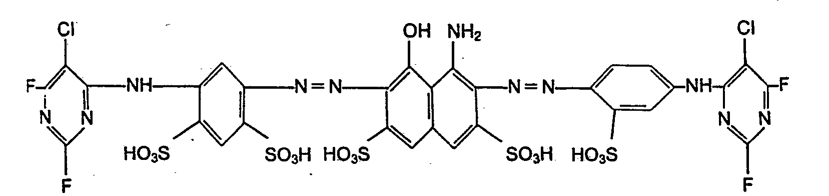 und färbt Baumwolle in grünstichig marineblauen Tönen.

Unter Verwendung der in den Beispielen 1 und 2 beschriebenen Kondensationsprodukte der Kolonnen I und 11 als Diazokomponenten und der Kupplungskomponenten der Kolonne III erhält man weitere wertvolle Farbstoffe, die Baumwolle in marineblauen Tönen färben.

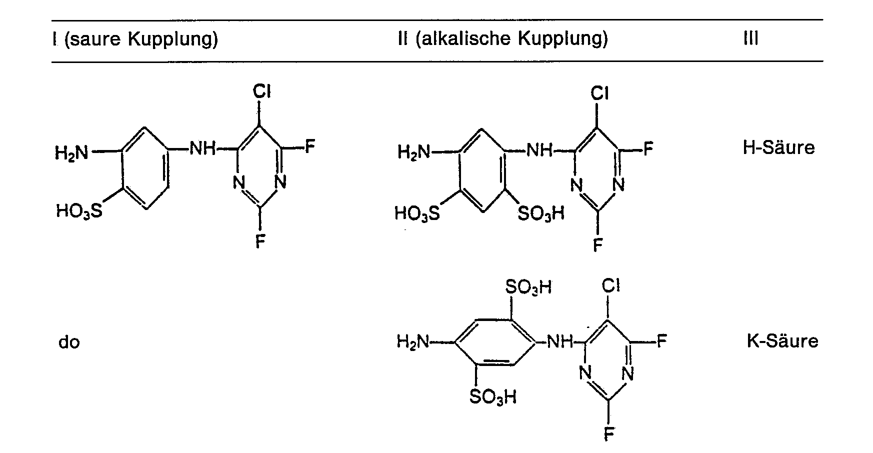

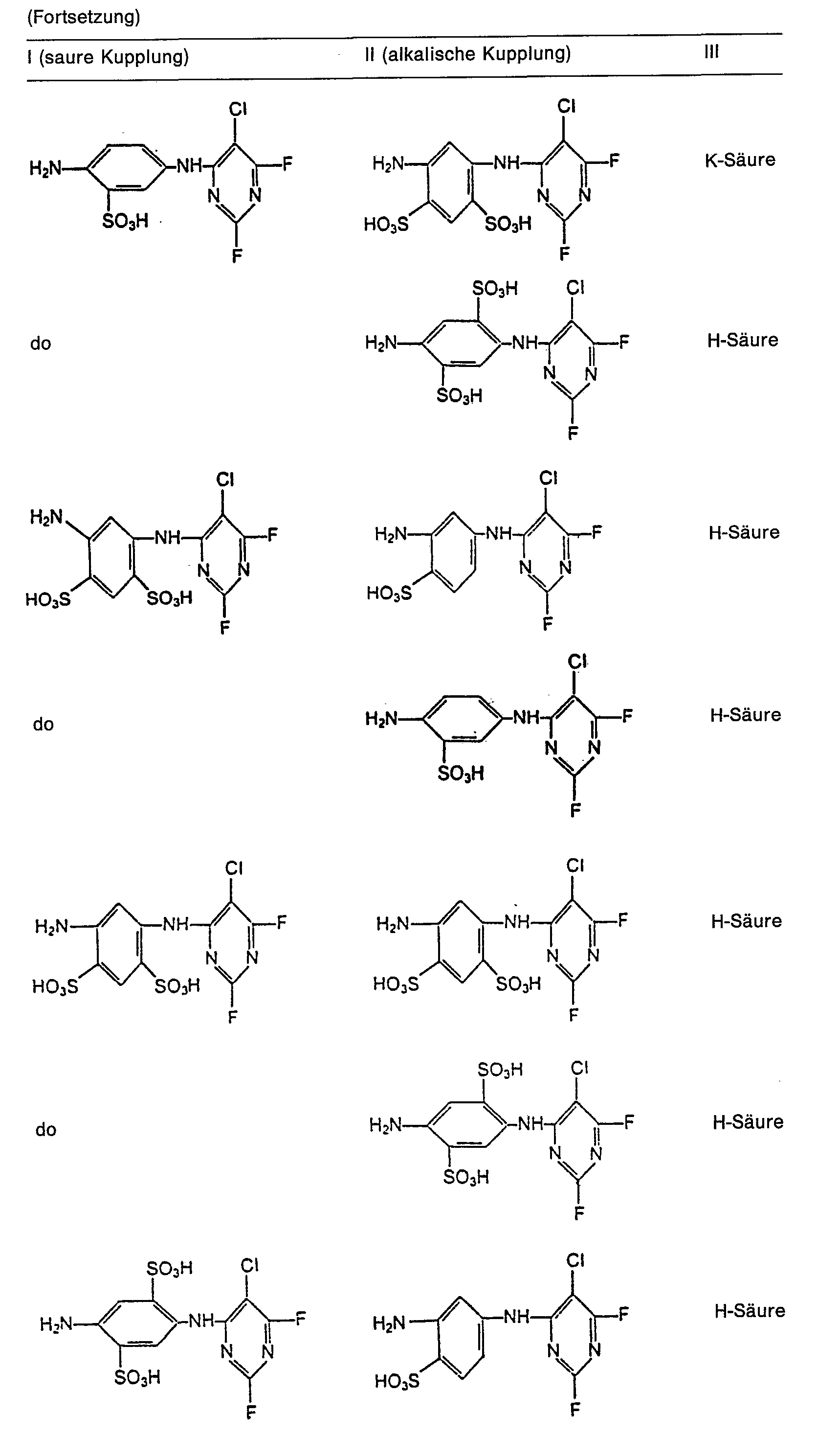

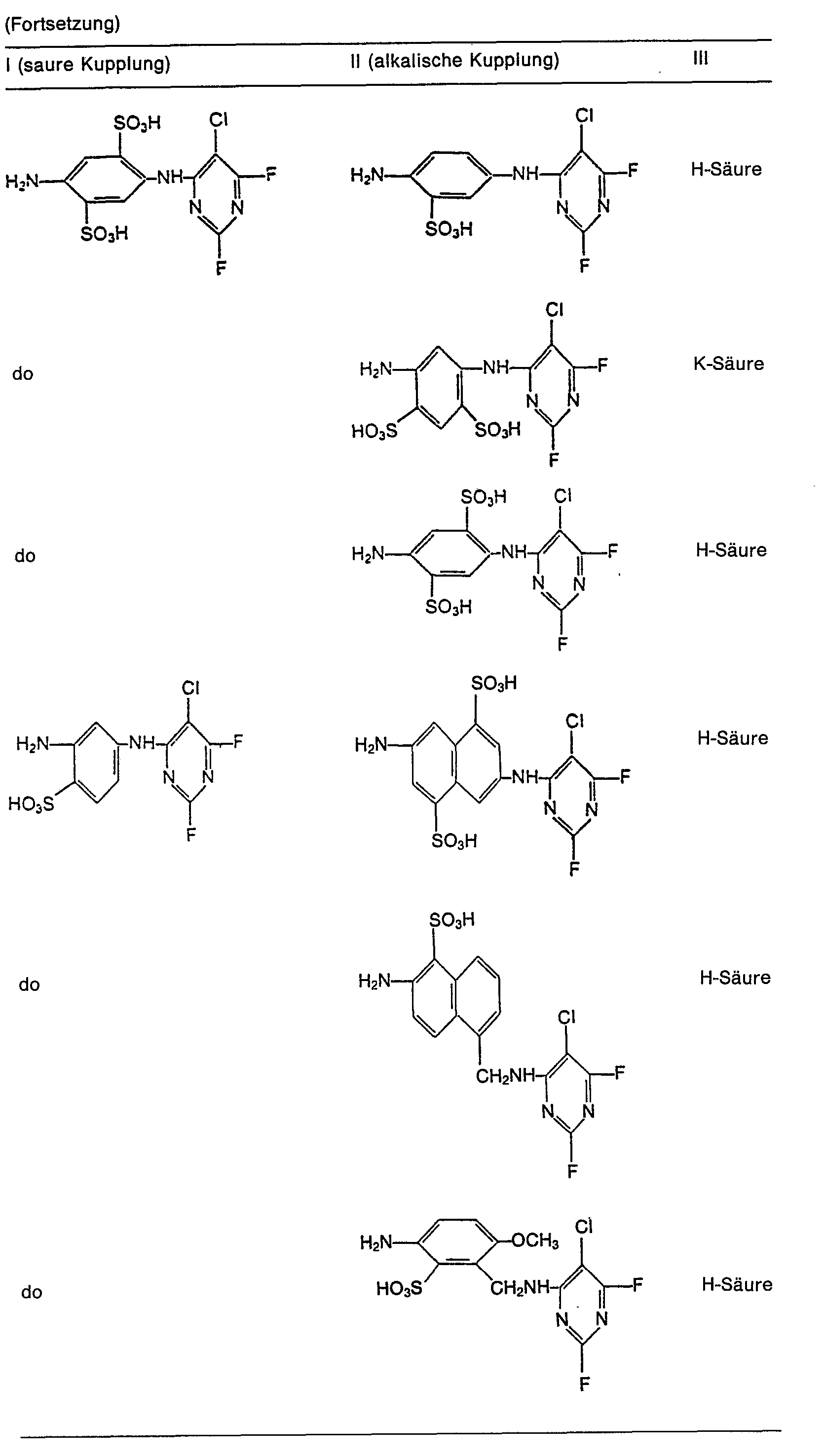

### Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40 °C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Färbevorschrift 11

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35 °C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

### Färbevorschrift 111

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift IV

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,1 Liter Wasserglas enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift V

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichtes zunimmt, und dann getrocknet. Dann imprägniert man das Gewebe mit einer 20 °C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

### Druckvorschrift

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel 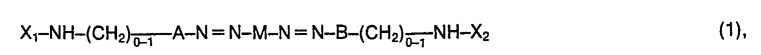 worin M zweifach gekuppelte 1-Amino-8-hydroxynaphthalin-3,6-disulfonsäure, 1-Amino-8-hydroxynaphthalin-4,6-disulfonsäure, 1-Amino-8-hydroxynaphthalin-4-sulfonsäure oder 2-Amino-5-hydroxynaphthalin-7-sulfonsäure, A und B unabhängig voneinander Sulfophenylen oder Sulfonaphthylen, das weitersubstituiert sein kann, und X₁ und X₂ je ein 2,4-Difluor-5-chlorpyri- midyl-(6)-Rest ist, mit der Bedingung, dass A und B zusammen mindestens 3 Sulfogruppen enthalten.

2. Reaktivfarbstoffe gemäss Anspruch 1, der Formel 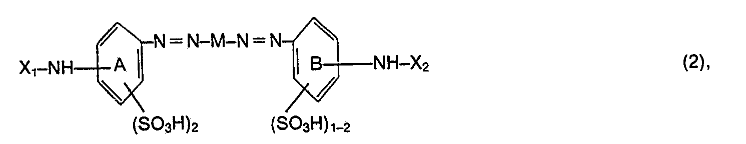 worin M, X₁ und X₂ die in Anspruch 1 angegebenen Bedeutungen haben, und die Benzolringe A und B unabhängig voneinander gegebenenfalls weitersubstituiert sind.

3. Reaktivfarbstoffe gemäss Anspruch 2, worin die Benzolringe A und B nicht weitersubstituiert sind.

4. Reaktivfarbstoffe gemäss Anspruch 3, der Formel 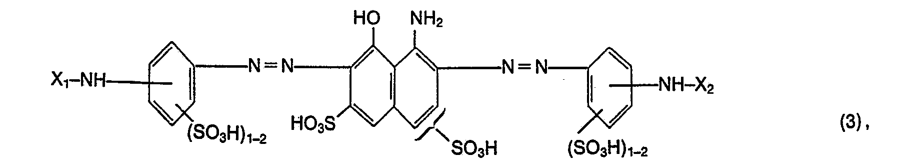 worin X₁ und X₂ die für Anspruch 3 geltenden Bedeutungen haben, und die Gesamtzahl der Sulfogruppen 5 bis 6 beträgt.

5. Reaktivfarbstoffe gemäss Anspruch 4, der Formel 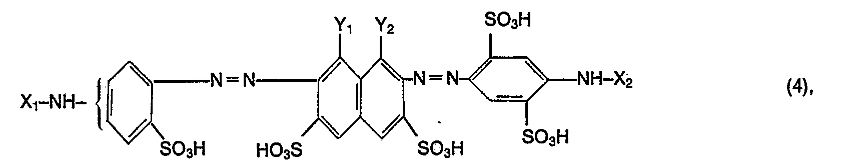 worin ein Y OH, und das andere Y NH₂ ist, und X₁ und X₂ die für Anspruch 4 geltenden Bedeutungen haben.

6. Reaktivfarbstoff gemäss Anspruch 5, der Formel 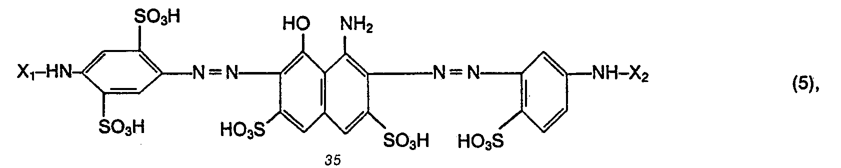 worin X₁ und X₂ die für Anspruch 5 geltenden Bedeutungen haben.

7. Verfahren zur Herstellung von Reaktivfarbstoffen gemäss Anspruch 1, dadurch gekennzeichnet, dass man Diazokomponenten der Formeln und 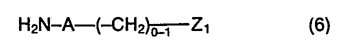 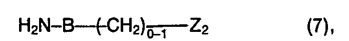 worin Z₁ und Z₂ unabhängig voneinander NH₂, Acetylamino oder Nitro ist, die Kupplungskomponente 1-Amino-8-hydroxynaphthalin-3,6-disulfonsäure, 1-Amino-8-hydroxynaphthalin-4,6-disulfonsäure, 1-Amino-8-hydroxynaphthalin-4-sulfonsäure oder 2-Amino-5-hydroxynaphthalin-7-sulfonsäure, und 2 Äquivalente 2,4,6-Trifluor-5-chlorpyrimidin durch Diazotierung, Kupplung und Kondensation in geeigneter Reihenfolge zu Reaktivfarbstoffen der Formel (1) umsetzt, wobei falls Z₁ oder Z₂ Acetylamino oder Nitro ist, dieses vor der Kondensation mit dem Halogenpyrimidin durch Verseifen der Acetylaminogruppe bzw. Reduzieren der Nitrogruppe in die NH₂ Gruppe übergeführt wird.

8. Verwendung der Reaktivfarbstoffe gemäss Anspruch 1, zum Färben oder Bedrucken von cellulosehaltigen Fasermaterialien.

9. Verwendung gemäss Anspruch 8, zum Färben oder Bedrucken von Baumwolle.

## Claims

1. A reactive dye of the formula 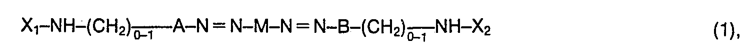 in which M is twice-coupled 1-amino-8-hydroxynaphthalene-3,6-disulfonic acid, 1-amino-8-hydroxynaphthalene-4,6-disulfonic acid, 1-amino-8-hydroxynaphthalene-4-sulfonic acid or 2-amino-5-hydroxynaphthalene-7-sulfonic acid, A and B, independently of each other, are each sulfophenylene or sulfonaphthylene which can be further substituted, and X₁ and X₂ are each a 2,4-difluoro-5-chloropyrimid-6-yl radical, subject to the condition that A and B together contain at least 3 sulfo groups.

2. A reactive dye according to Claim 1 of the formula

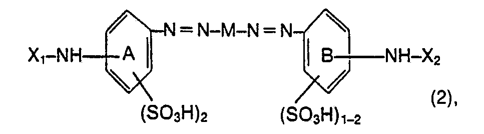

in which M, X₁ and X₂ are as defined in Claim 1, and the benzene rings A and B, independently of each other, can be further substituted.

3. A reactive dye according to Claim 2 in which the benzene rings A and B are not further substituted.

4. A reactive dye according to Claim 3 of the formula 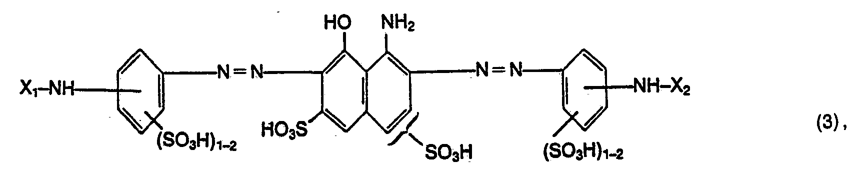 in which X₁ and X₂ are as defined for Claim 3, and the total number of sulfo groups is 5 or 6.

5. A reactive dye according to Claim 4 of the formula 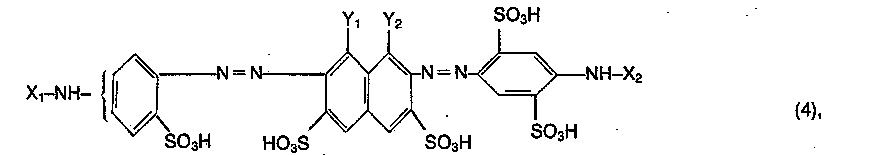 in which one Y is OH while the other Y is NH₂, and X₁ and X₂ are as defined for Claim 4.

6. A reactive dye according to Claim 5 of the formula 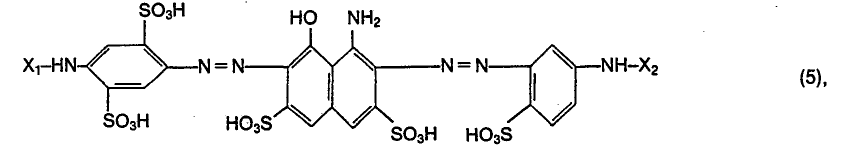 in which X₁ and X₂ are as defined for Claim 5.

7. A process for preparing a reactive dye according to Claim 1, which comprises reacting diazo components of the formulae and 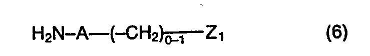 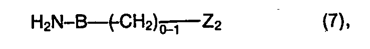 in which Z₁ and Z_{z}, independently of each other, are each NH₂, acetylamino or nitro, the coupling component 1-amino-8-hydroxynaphthalene-3,6-disulfonic acid, 1-amino-8-hydroxynaphthalene-4,6-disulfonic acid, 1-amino-8-hydroxynaphthalene-4-sulfonic acid or 2-amino-5-hydroxynaphthalene-7-sulfonic acid, and 2 equivalents of 2,4,6-trifluoro-5-chloropyrimidine by diazotising, coupling and condensing them in suitable order to give reactive dyes of the formula (1) in such a way that, if Z₁ or Z₂ is acetylamino or nitro, it is converted into the NH₂ group, by hydrolysis in the case of the acetylamino group or reduction in the case of the nitro group, before condensation with the halogenopyrimidine.

8. The use of a reactive dye according to Claim 1 for dyeing or printing cellulose-containing fibre materials.

9. The use according to Claim 8 for dyeing or printing cotton.

## Revendications

1. Colorants réactifs de formule 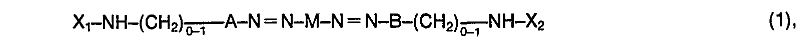 dans laquelle M est l'acide 1-amino-8-hydroxynaphtalène-3,6-disulfonique, 1-amino-8-hydroxynaphtalène-4,6-disulfonique, 1-amino-8-hydroxynaphtalène-4-sulfonique ou 2-amino-5-hydroxynaphtalène-7-sulfonique, deux fois copulé, A et B sont, indépendamment l'un de l'autre, un radical sulfophénylène ou sulfo- naphtylène qui peut être substitué davantage, et X₁ et X₂ sont chacun un reste 2,4-difluoro-5-chloro- pyrimidyle-(6), avec la condition que A et B contiennent ensemble au moins 3 groupes sulfo.

2. Colorants réactifs selon la revendication 1, de formule 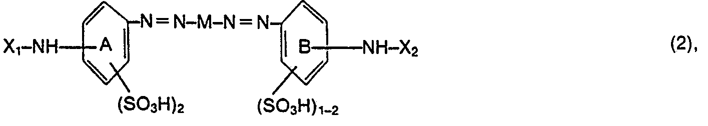 dans laquelle M, X₁ et X₂ ont les significations données dans la revendication 1, et les noyaux benzéniques A et B sont éventuellement substitués davantage, indépendamment l'un de l'autre.

3. Colorants réactifs selon la revendication 2, dans lesquels les noyaux benzéniques A et B ne sont pas substitués davantage.

4. Colorants réactifs selon la revendication 3, de formule 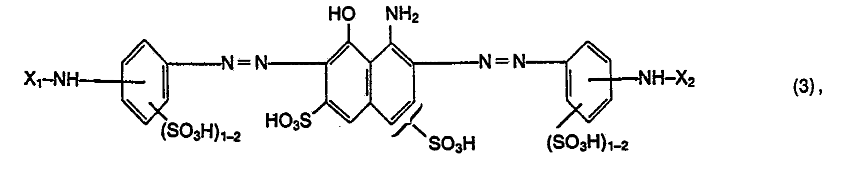 dans laquelle X₁ et X₂ ont les significations valables pour la revendication 3, et le nombre total des groupes sulfo est égal à 5 ou 6.

5. Colorants réactifs selon la revendication 4, de formule 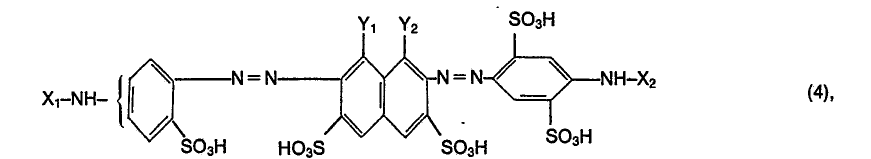 dans laquelle un radical Y est OH et l'autre radical Y est NH₂, et X₁ et X₂ ont les significations valables pour la revendication 4.

6. Colorant réactif selon la revendication 5, de formule 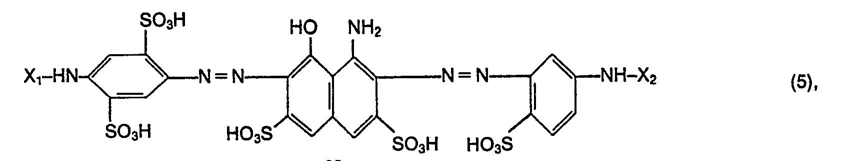 dans laquelle X₁ et X₂ ont les significations valables pour la revendication 5.

7. Procédé pour la préparation de colorants réactifs selon la revendication 1, caractérisé par le fait que l'on fait réagir des composants diazo de formules et 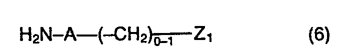 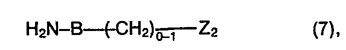 dans lesquelles Z₁ et Z₂ sont, indépendamment l'un de l'autre, un groupe NH₂, acétylamino ou nitro, le composant de copulation acide 1-amino-8-hydroxynaphtalène-3,6-disulfonique, 1-amino-8-hydroxynaphtalène-4,6-disulfonique, 1-amino-8-hydroxynaphtalène-4-sulfonique ou 2-amino-5-hydroxynaphtalène-7-sulfonique, et 2 équivalents de 2,4,6-trifluoro-5-chloropyrimi- dine, par diazotation, copulation et condensation, en un ordre convenable, pour aboutir aux colorants réactifs de formule (1), et au cas où Z₁ ou Z₂ est un groupe acétylamino ou nitro, celui-ci étant transformé en le groupe NH₂ par saponification du groupe acétylamino ou, respectivement, réduction du groupe nitro, avant la condensation avec l'halogénopyrimidine.

8. Utilisation des colorants réactifs selon la revendication 1, pour la teinture ou l'impression de matériaux fibreux cellulosiques.

9. Utilisation selon la revendication 8, pour la teinture ou l'impression du coton.
